**Europäisches Patentamt**

**European Patent Office**

**Office européen des brevets**

(19)

(11) Veröffentlichungsnummer: **0 221 266**
**B1**

(12) # EUROPÄISCHE PATENTSCHRIFT

(45) Veröffentlichungstag der Patentschrift:
**05.10.88**

(21) Anmeldenummer: **86111578.0**

(22) Anmeldetag: **30.05.84**

(60) Veröffentlichungsnummer der früheren Anmeldung
nach Art. 76 EPÜ: **0128464**

(51) Int. Cl.⁴: **B 23 Q 3/00**, B 23 Q 13/00,
G 01 B 7/00

(54) **Magazin für eine Messmaschine mit Tasterwechseleinrichtung.**

(43) Veröffentlichungstag der Anmeldung:
**13.05.87 Patentblatt 87/20**

(45) Bekanntmachung des Hinweises auf die Patenterteilung:
**05.10.88 Patentblatt 88/40**

(84) Benannte Vertragsstaaten:
**CH DE FR GB IT LI SE**

(56) Entgegenhaltungen:
EP - A - 0 050 797
EP - A - 0 060 638
EP - A - 0 142 373
GB - A - 2 047 133

(73) Patentinhaber: **Firma Carl Zeiss, D-7920 Heidenheim (Brenz) (DE)**

(84) Benannte Vertragsstaaten: **CH DE FR IT LI SE**

(73) Patentinhaber: **CARL-ZEISS-STIFTUNG trading as CARL ZEISS, D-7920 Heidenheim (Brenz) (DE)**

(84) Benannte Vertragsstaaten: **GB**

(72) Erfinder: **Schneider, Horst, Amselweg 8, D-7923 Königsbronn (DE)**
Erfinder: **Zeeh, Reiner, Hans-Holbein-Strasse 49, D-7920 Heidenheim (Brenz) (DE)**
Erfinder: **Neumann, Hans Joachim, Bunsenstrasse 6, D-7082 Oberkochen (DE)**

**Beschreibung**

Die Erfindung betrifft eine Messmaschine mit einer Tasterwechseleinrichtung, wie sie z.B. in der europäischen Anmeldung EP-A-0 128 464 beschrieben ist. Die vorliegende Anmeldung ist eine Teilanmeldung dieser Anmeldung.

Für einen automatisch von der Maschine aus gesteuerten Tasterwechsel ist neben einer geeignet ausgebildeten Aufnahme, wie sie Gegenstand der Stammanmeldung ist, ein im Bewegungsbereich der Messmaschine, z.B. am Rande des Messbereiches aufgebautes Magazin erforderlich, in dem die verschiedenen Messwerkzeuge bereit gehalten werden, d.h. wo die Spanneinrichtung die nicht mehr benötigten Taststiftkombinationen ablegt.

Ein solches Magazin mit mehreren Plätzen, in die die Messwerkzeuge einhängbar sind, besitzen auch die bereits aus der DE-A-1-3 011 002 bekannte Tasterwechseleinrichtung.

Im Hinblick auf möglichst geringe Messzeiten ist es wünschenswert, dass die jeweils eingewechselte Taststiftkombination nicht jedes Mal wieder neu kalibriert werden muss. Nun legen die statischen Dreipunktlager, über die der eingewechselte Taststift am Tastkopf der Messmaschine anliegt, die räumliche Lage der Taststiftkombination relativ zum Tastkopf zwar mit einer ausreichend hohen Wiederholgenauigkeit fest. Die in bekannten Magazinen abgelegten Taststifte können dort jedoch an ihrer Lagerseite einstauben, was beim anschliessenden Einwechseln ein Dejustieren der Relativlage zwischen Taststift und Tastkopf aufgrund von Staubpartikeln zur Folge hat.

Bei Werkzeugmaschinen ist es bekannt, für das Magazin zur Ablage der nicht benötigten Werkzeuge eine Schutzbedeckung vorzusehen, die ein Verschmutzen der Werkzeuge mit Spänen und Kühlflüssigkeit verhindert. Ein derartig geschütztes Magazin ist in der EP-A2-0 050 797 beschrieben. Die Schutzabdeckung erstreckt sich dort jedoch nur auf den Teil des Magazins, der dem Arbeitskopf der Maschine benachbart ist. Beim Werkzeugwechsel gibt die Abdeckung das gesamte Magazin frei. Mit diesen Massnahmen lässt sich ein Einstauben der Anschlusskörper nicht zuverlässig vermeiden. Ausserdem stellt sich bei Bearbeitungsmaschinen wegen den im Vergleich zu Koordinatenmessgeräten geringeren Anforderungen an die Masshaltigkeit der einzuwechselnden Werkzeuge das angesprochene Problem des Neukalibrierens aufgrund von verstaubten Lagerstellen nicht.

Es ist die Aufgabe der vorliegenden Erfindung, das Magazin für eine Messmaschine mit Tasterwechseleinrichtung so auszubilden, dass Dejustierungen des eingewechselten Messwerkzeuges zuverlässig vermieden sind.

Diese Aufgabe wird durch eine Ausbildung gemäss den im Kennzeichen des Hauptanspruches angegebenen Merkmalen gelöst.

Der Vorteil der Erfindung ist in einer erheblichen Messzeitverkürzung zu sehen, da auf ein Kalibrieren des eingewechselten Tasters verzichtet werden kann. Das macht sich insbesondere im automatischen Betrieb bei Messaufgaben, die ein häufiges Tasterwechseln erfordern, bemerkbar.

Ein Ausführungsbeispiel der Erfindung wird nachstehen anhand der Figur näher erläutert:

Das in der Figur dargestellte Magazin enthält mehrere an einer Schiene 30 relativ zueinander verschiebbare Platten, in die die Tasstiftkombinationen eingehängt werden können. Zwei, mit 31 und 41 bezeichnete Platten sind dargestellt.

Die Platten 31 und 41 besitzen dazu jeweils eine gabelförmige Öffnung 37 bzw. 47, die eine waagerechte Zuführung der Taststiftkombination erlaubt.

Die Platten 31 und 41 tragen ausserdem jeweils eine um ein Drehlager 32 bzw. 42 schwenkbare Abdeckplatte 33 bzw. 44, durch die die Lagerseite des Anschlusskörpers 15-18 der eingehängten Taststiftkombinationen (z.B. 21) schützend abgedeckt werden kann. An ihrer Unterseite tragen beide Abdeckplatten 33 und 44 eine Samtschicht 34 bzw. 43, die beim Schwenkvorgang säubernd über die Lagerkugeln 15 des Anschlusskörpers streicht. Diese Samtschicht schützt die Lagerseite des Anschlusskörpers zuverlässig gegen Einstauben und verhindert damit ein Dejustieren der Relativlage von Taststift und Tastkopf aufgrund von Staubpartikeln.

Im Normalfalle, d.h. zwischen den Wechselvorgängen befinden sich die Platten 33 und 44 durch eine nicht dargestellte Feder zurückgezogen, in der für die Platte 33 gezeichneten Stellung über dem Magazinplatz und bedecken die Lagerseite des Anschlusskörpers, wenn eine Taststiftkombination eingehängt ist.

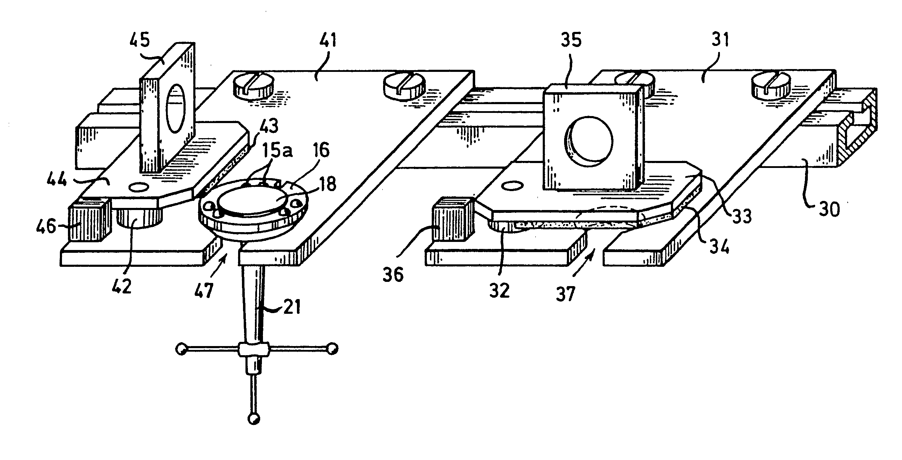

Auf der Oberseite der Abdeckplatten sind Betätigungsklötze 35 und 45 befestigt. Gegen diese Klötze fährt der Tastkopf der Messmaschine beim Wechselvorgang nit seinem überstehenden, maschinenfesten Teil und legt damit selbsttätig die Lagerseite der eingehängten Taststiftkombination frei, so dass diese durch Erregung des Elektromagneten 10 in der in Fig. 1-3 der Stammanmeldung dargestellten Aufnahme im Tastkopf der Maschine dem Magazin entnommen werden kann.

Zwei Haltemagnete 36 und 46 auf den Platten 31 und 41 erlauben ein Offenhalten der Magazinplätze für den Fall, dass mit Hilfe des Tastkopfes die Lagekoordinaten der Magazinplätze exakt ausgemessen werden sollen, um die Daten für eine programmgesteuerte Zuführung bzw. Entnahme der Taststifte zu bzw. aus den Magazinplätzen zu erhalten.

**Patentansprüche**

1. Messmaschine mit einem Magazin zur Maschinengesteuerten Ablage bzw. Wiederaufnahme von auswechselbaren Tastelementen (21) wobei das Magazin im Bewegungsbereich der Messmaschine angeordnet ist und mehreren Magazinplätze (31, 41) in Form von einseitig offenen Haltern besitzt, dadurch gekennzeichnet das für jeden Magazinplatz (31, 41) eine eigene separat bewegliche Abdeckung (33, 44) vorgesehen ist und die Abdeckungen Platten sind die jeweils die Lagerseite der Anschlusskörper der in das Magazin eingehängten Tastelement bedecken.

2. Messmaschine nach Anspruch 1, dadurch gekennzeichnet , dass die gegenseitige Lage der Halter (37, 47), in die die Tastelemente (21) einhängbar sind, einstellbar ist.

3. Messmaschine nach Anspruch 1, dadurch gekennzeichnet, dass die Abdeckungen (34, 44) wegschwenkbar über den Magazinplätzen (31, 41) angeordnet sind.

4. Messmaschine nach Anspruch 1, dadurch gekennzeichnet, dass die Platten (33, 34) an der Unterseite eine Samtschicht (34, 44) tragen, und die Samtschicht beim Wechselvorgang säubernd über die Lageseite des Anschlusskörpers des Tastelements (21) streicht.

## Claims

1. Measuring machine with a magazine for machine-controlled storing and pick up of interchangeable probe elements, with the magazine being set up within the working range of the measuring machine, featuring several magazine locations (31, 41) in the form of holders open at one side, characterized by the fact that an individual, separately mobile cover (33, 41) is provided for each magazine location (31, 41), these covers consisting of plates which cover the bearing faces of the connecting bodies of the probe elements suspended in the magazine.

2. Measuring machine according to claim 1, characterized by the fact the positions of the holders (37, 47) in which the probe elements (21) are suspended, can be adjusted with respect to each other.

3. Measuring machine according to claim 1, characterized by the fact that the covers (34, 44) can be swung out of position over the magazine locations (31, 41).

4. Measuring machine according to claim 1, characterized by the fact that the lower sides of the plates (33, 44) are covered by a velvet coating (34, 44), with the velvet coating brushing over the bearing face of the connecting body of the probe element (21) for cleaning purposes during the changing procedure.

## Revendications

1. Machine à mesurer comportant un magasin pour le dépot et la reprise, commandés par la machine, d'éléments de palpage (21) interchangeables, le magasin étant disposé dans la zone de mouvement de la machine à mesurer et possédant plusieurs emplacements de magasin (31, 41) sous forme de supports ouverts d'un côté, caractérisée en ce qu'un recouvrement individuel (33, 44), déplaçable séparément, est prévu pour chacun des emplacements de magasin (31, 41) et que les recouvrements sont des plaques recouvrant chacune le côté appui de la pièce de raccordement de l'élément de palpage suspendu dans le magasin.

2. Machine à mesurer selon la revendication 1, caractérisée en ce que la position relative des supports (37, 47), dans lesquels peuvent être suspendus les éléments de palpage (21), est réglable.

3. Machine à mesurer selon la revendication 1, caractérisée en ce que les recouvrements (34, 44) sont disposés au-dessus des emplacements (31, 41) du magasin de manière qu'ils puissent être écartés par pivotement.

4. Machine à mesurer selon la revendication 1, caractérisée en ce que les plaques (33, 44) portent, sur le dessous, une couche de velours (34, 44) qui, lors de l'opération de changement, effleure, en le nettoyant, le côté appui de la pièce de raccordement de l'élément de palpage (21).